# EUROPÄISCHE PATENTSCHRIFT

(11) **EP 4 122 593 B1**
(45) Veröffentlichungstag und Bekanntmachung des Hinweises auf die Patenterteilung: **24.01.2024**
(21) Anmeldenummer: 22185535.6
(22) Anmeldetag: 18.07.2022
(51) Int. Cl.: B01J 19/12, F24S 20/00

(54) **SYSTEM ZUR ERZEUGUNG VON HOHEN TEMPERATUREN IN EINEM REAKTOR**
SYSTEM FOR PRODUCING HIGH TEMPERATURES IN A REACTOR
SYSTÈME DE GÉNÉRATION DE LA HAUTE TEMPÉRATURE DANS UN RÉACTEUR

(30) Priorität: 20.07.2021 CH 0700812021
(43) Veröffentlichungstag der Anmeldung: 25.01.2023
(73) Patentinhaber: Ziemba, Georg, 88175 Scheidegg (DE)
(72) Erfinder: Ziemba, Georg, 88175 Scheidegg (DE)
(74) Vertreter: Swisspat Riederer Hasler Patentanwälte AG

(56) Entgegenhaltungen:
- WO-A1-03/076334
- WO-A1-2019/234991
- US-A- 4 290 779
- US-A1- 2006 048 808
- US-A1- 2011 120 451

## Beschreibung

### TECHNISCHES GEBIET DER ERFINDUNG

Die Erfindung betrifft ein System zur Erzeugung von Temperaturen von 2000 °C bis zu 2500 °C zum Bewirken von Zersetzungsreaktionen von Gasen , wie zum Beispiel die Zerlegung von Wasser in Wasserstoff und Sauerstoff.

### HINTERGRUND DER ERFINDUNG

Der Umbau der Wirtschaft in eine emissionsarme Kreislaufwirtschaft verlangt nach einer Diversität von Energieträgern und -speichern. Ein immer stärker in den Vordergrund rückender Energiespeicher ist Wasserstoff. Ein grosser Vorteil von Wasserstoff liegt darin, dass dieser mithilfe von beispielsweise Brennstoffzellen emissionsfrei zur Energieerzeugung verwendet werden kann. Zugleich ist die Speicherung und der Transport von Wasserstoff im Vergleich zu Strom mit einem kleineren Aufwand realisierbar.

Die Herstellung von Wasserstoff stellt einen energieintensiven Prozess dar. Heutzutage wird Wasserstoff entweder durch Elektrolyse von Wasser oder durch Aufspaltung von Kohlenwasserstoffverbindungen gewonnen. Die letztgenannte Variante der Wasserstoffgewinnung kommt derweil nicht in Frage, da es ja gilt, von den fossilen Brennstoffen wegzukommen.

Die Elektrolyse von Wasser ist ein bekannter chemischer Prozess, bei welchem elektrische Energie durch Zersetzung von Wasser in Wasserstoff und Sauerstoff in chemische Energie umgewandelt wird. Die Bedingung für die Elektrolyse ist somit die Zurverfügungstellung von elektrischer Energie.

Grundsätzlich kann Wasserstoff auch durch thermische Dissoziation bzw. Thermolyse von Wasserdampf gewonnen werden. Dabei wird Wasserdampf auf eine derart hohe Temperatur erhitzt, dass eine Dissoziation bzw. Teilung von Wasserdampf in seine Bestandteile Wasserstoff und Sauerstoff stattfindet. In einem solchen Prozess wird thermische Energie in chemische Energie umgewandelt.

Die thermische Dissoziation kann auch zur Spaltung von anderen chemischen Verbindungen verwendet werden. Für das Eintreten einer thermischen Dissoziation sind jedoch in der Regel sehr hohe Temperaturen von über 2000 °C erforderlich. Zudem muss die Vorrichtung, in welcher ein thermischer Dissoziations-Prozess stattfinden soll, diese hohen Temperaturen aushalten können. Zugleich muss die Vorrichtung eine räumliche Trennung der entstandenen Bestandteile voneinander ermöglichen. Das Aufheizen der Vorrichtung auf die für die Dissoziation erforderlichen Temperaturen bildet aus den oben genannten Gründen eine grosse Herausforderung. Die Energiequelle zur Erzeugung der thermischen Energie soll möglichst durch Verwendung von erneuerbaren Energien erzielt werden.

Die Energiequelle zur Erzeugung der thermischen Energie hat wiederum einen grossen Einfluss auf die Effizienz und Ökobilanz des gesamten Prozesses. Eine starke Verbesserung der Ökobilanz kann nur durch Verwendung von erneuerbaren Energien erzielt werden.

Üblicherweise wird zur Erzeugung hoher Temperaturen mittels Solarstrahlung diese über Spiegelsysteme fokussiert und die derart verdichtete Solarstrahlung direkt auf den zu erwärmenden Reaktor - oder durch gläserne Fenster eines äusseren Behälters - oder durch die Wandung einer gläsernen Röhre dem Reaktor zugeführt. Dabei wird zwischen dem konzentrierten Wärmeanteil der Strahlung und dem konzentrierten Lichtanteil nicht unterschieden. Wird die so konzentrierte Strahlung durch Glas- oder Quarzfenster oder über die Wandung einer Glasröhre dem Reaktor zugeführt, ist die Leistungsdichte begrenzt, da der konzentrierte Wärmeanteil der Strahlung Glas bzw. Quarz nicht durchdringen kann. Dieser Teil der Strahlung wird einerseits reflektiert, aber andererseits von dem Glas/Quarz-Material absorbiert, wodurch dieses stark erwärmt wird. Da Glas bei Temperaturen über 1000 °C nicht mehr stabil ist, kann auf diese Weise der Reaktor nicht ohne Weiteres auf eine Temperatur von über 2000 °C aufgeheizt werden.

In WO 2006/0048808 A1 ist eine Anlage gezeigt, welche Solarenergie für die thermische Dissoziation von Wasser in Wasserstoff und Sauerstoff verwendet. Die Anlage ist vorgesehen, die Reaktion zur Dissoziation bei Temperaturen um 1000° C stattfinden zu lassen. Die Zersetzungsreaktion soll begünstigt werden durch Einsatz eines Katalysators, bei diesen, für die thermische Wassersetzung sehr niedrigen Temperaturen. Nach der Zersetzungsreaktion soll Wasserstoff in einen Hohlraum diffundieren, aus welchem dieser mit Hilfe von Stickstoff als Spülgas ausgeschwemmt wird. Gemäss einer gezeigten Ausführung soll die Strahlung, die auf einen Reflektor oder einen Spiegel auftrifft, eine rückgestrahlte Strahlung ohne wesentliche Wellenlängenänderung in Richtung eines Kollektors bewirken.

WO 03/076334 A1 zeigt eine Anlage und ein Verfahren zur Abspaltung von Wasserstoff aus einer Kohlenstoff-Verbindung. Die Anlage kann unter anderem mit konzentrierten Solarstrahlen betrieben werden, um die erforderliche Temperatur zur Dissoziation von Wasserstoff aus der Kohlenstoff-Verbindung zu erreichen. Die Anlage umfasst eine innere, erste Schale, welche eine poröse Umwandung aufweist. Die zweite Schale ist ein nicht-poröse Umwandung, wobei zwischen der ersten und zweiten Schale die gasförmige Kohlenstoff-Verbindung fliest. Die dritte Schale dient zur Aufnahme der Solarenergie oder kann auch ein Fenster aufweisen, womit die Solarenergie auf die zweite Schale wirkt und diese aufheizt. Die aufgeheizte zweite Schale strahlt die Wärme an die gasförmige Kohlenstoff-Verbindung, welche aufgeteilt wird in einzelne chemische Bestandteile. Die erste Schale weist eine derartige Porosität auf, dass lediglich die Wasserstoff-Teilchen diese passieren können. Innerhalb der ersten Schale befinden sich somit Wasserstoff-Teilchen, welche mit Hilfe einer Strömung weggeführt werden.

US2006/048808 offenbart einen Solarreaktor zur Herstellung von Wasserstoff.

### AUFGABE

Es ist deshalb eine Aufgabe der vorliegenden Erfindung, ein alternatives System zum Bewirken von Zersetzungsreaktionen von Gasen durch Erzeugung von Temperaturen von 2000 °C bis zu 2500 °C mit Hilfe von Solarstrahlen zu zeigen.

### BESCHREIBUNG

Die Aufgabe wird gelöst mit einem System mit den Merkmalen des Patentanspruchs 1. Die Erfindung bezieht sich auf ein System zur Erzeugung von Temperaturen von 2000°C bis zu 2500 °C zum Bewirken von Zersetzungsreaktionen von Gasen, wie beispielsweise die Zerlegung von Wasser in Wasserstoff und Sauerstoff, in einem chemischen Reaktorkörper energetisch versorgt durch Verwendung von verdichtetem Sonnenlicht. Der Reaktorkörper ist vorgesehen, Lichtenergie durch seine äussere Oberfläche aufzunehmen und umfasst ein poröses Material. Im Reaktorkörper wird ein ausgewähltes Gas in mindestens zwei Komponenten zerlegt, wovon die eine, z.B. Wasserstoff, durch Diffusion in einen Hohlraum gelangt, von dem aus sie abgepumpt werden kann. Das System umfasst eine Zufuhrleitung und Abfuhrleitung zum Zuführen bzw. Abführen des Gases in den oder aus dem Reaktorkörper, einen Wärmetauscher, Hitzeschilde, Kühlsysteme für die Hitzeschilde und einen Behälter. Der Wärmetauscher ermöglicht eine Wärmeübertragung von ein- und ausströmenden Gasen möglichst verlustfrei im Temperaturbereich oberhalb von 1000 °C. Die Hitzeschilde umschliessen den Reaktorkörper und die Wärmetauscher in geeignetem Abstand und reflektieren die von diesen abgegebene Wärmestrahlung. Die Kühlsysteme für die Hitzeschilde umfassen mehrere ineinander liegende Rohrsysteme, die abwechselnd evakuiert sind bzw. von verschiedenen Kühlmitteln durchströmt werden. Der Behälter umschliesst den Reaktorkörper, die Wärmetauscher und die Hitzeschilde und ist evakuiert, mit dem Ziel, die Energieverluste des Systems auf möglichst gering zu haltende Strahlungsverluste zu beschränken. Des Weiteren umfasst das System eine grosse Anzahl von Lichtquellen, welche fokussierte Lichtenergie durch Fenster in der Wand des Behälters und Öffnungen in den Hitzeschilden auf den Reaktorkörper richten, so dass der Reaktorkörper möglichst gleichmässig erwärmt wird. Glasfaserleitungen sind vorgesehen, welche die Lichtenergie zu den Lichtquellen führen.

Das System hat den Vorteil, dass das verdichtete Sonnenlicht zur Aufheizung eines Reaktorkörpers dient. Somit wird Solarenergie in thermische Energie umgewandelt. Diese thermische Energie wiederum wird verwendet, um eine chemische Reaktion im Reaktorkörper hervorzurufen. Die Umwandlung von Solarenergie in thermische Energie erfolgt am Reaktorkörper und nicht an der Lichtquelle, welche den Reaktorkörper mit Lichtstrahlen bestrahlt. Die chemische Reaktion ist eine thermische Dissoziation und hat zum Ziel, das der Wärme ausgesetzte Gas in seine Komponenten bzw. in seine einzelnen Moleküle aufzuteilen. Eine dieser Komponenten des Gases wird von den restlichen Komponenten getrennt und in einen vorzugsweise separaten Hohlraum des Reaktorkörpers geführt. Von diesem Hohlraum werden diese separierten Komponenten des Gases mit Hilfe einer Pumpe weggefördert. Der Reaktorkörper weist vorzugsweise Durchbohrungen auf, welche als Pfade für das zu zersetzende Gas dienen. Der Behälter bildet weitestgehend den äusseren Rahmen des Systems. Der Reaktorkörper ist bevorzugt über die Zufuhr- und Abfuhrleitungen am Behälter angeordnet. Die Leitungen führen das zu erwärmende Gas in den Reaktorkörper und führen dieses auch wieder weg. Zwischen den Leitungen kann eine Wärmebrücke angebracht sein, welche als Wärmetauscher dient. Damit kann die Wärme des herausströmenden Gases zum Aufheizen des einströmenden Gases verwendet werden. Dies wiederum führt zu einer Erhöhung der Effizienz des gesamten Verfahrens und somit auch des Systems. Durch Verwendung von Glasfaserleitungen zum Zuführen von Solarenergie an die Lichtquellen, wird die Energie den Lichtquellen in Form von Strahlenenergie und nicht in Form von Wärme zugeführt. Denn Glasfaserleitungen können keinen Strom oder keine Wärme transportieren, sondern sind vorgesehen, Licht zu übertragen. Das bietet den Vorteil, dass eine hohe Menge an Energie an die Lichtquellen übertragen wird und ausgehend von diesen Lichtquellen Lichtstrahlen zum Reaktorkörper geführt werden können. Die Lichtstrahlen müssen das Fenster im Behälter und die Öffnung im Hitzeschild passieren, um auf den Reaktorkörper aufzutreffen. Im Gegensatz zur Bestrahlung mit Wärmestrahlen wie im Stand der Technik erfolgt bei Verwendung von Lichtenergie als Strahlenenergie keine Aufwärmung der Fenster beim Passieren der Strahlen durch die Fenster. Da die Fenster nicht aufgeheizt und nicht verformt werden, kann der Reaktorkörper im erfindungsgemässen System die für die Dissoziation von Wasser in Wasserstof und Sauerstoff erforderlichen Temperaturen von über 2000 °C erreichen. Die Temperatur des Reaktorkörpers ist derart hoch, dass dieser zusammen mit den Wärmetauschern von einem Hitzeschild umgeben sein muss. Das Hitzeschild reflektiert die vom Reaktorkörper emittierte Wärmestrahlung zurück auf den Reaktorkörper oder auf die Wärmetauscher. Damit wird zum einen die Temperatur ausserhalb des Hitzeschildes reduziert, wodurch die Systemkomponenten ausserhalb des Hitzeschildes nicht mehr derart grossen Temperaturen ausgesetzt sind und eine grössere Haltbarkeit aufweisen. Zum anderen wird die vom Reaktorkörper emittierte Wärme wieder für die Aufheizung des Reaktorkörpers verwendet und der vollständige Verlust dieser thermischen Energie wird dadurch verhindert. Beide Aspekte führen zu einer Steigerung der Energieeffizienz des System durch Benutzung der Hitzeschilde. Um den oben beschriebenen Effekt der Hitzeschilde umzusetzen, sollen die Hitzeschilde in geeignetem Abstand zum Reaktorkörper angeordnet sein. Wenn die Hitzeschilde eine Temperatur von ca. 1000 °C haben sollen, ist bei einem zylindrischen System der Radius der Hitzeschilde etwa 3-mal so gross wie jener des Reaktorkörpers zu wählen. Hat der Reaktorkörper etwa einen Radius von 60 - 65 cm, so sollten die Hitzeschilde einen solchen von ca. 180 - 200 cm haben.

Das Hitzeschild ist mittels eines Rohrsystems am Behälter angeordnet. Das Rohrsystem umfasst konzentrisch ineinander liegende Rohre. Der Zwischenraum zweier benachbarter Rohre ist entweder evakuiert oder von einem Fluid durchflossen. Durch die in den Zwischenräumen von Rohren strömenden Fluide wird eine erhöhte Wärmeübertragung und in diesem spezifischen Fall ein erhöhter Wärmeabtransport erzielt. Gleichzusetzen ist dieser Vorgang mit einer aktiven Kühlung des Hitzeschildes mittels des Rohrsystems und der darin geführten Fluide.

Der Behälter weist vorzugsweise die gleiche geometrische Form auf wie der Reaktorkörper. Am Behälter sind die Leitungen zum Zu- und Abführen des Gases in den Reaktorkörper fest angebracht. Dies ermöglicht das feste Anbringen der im Behälter angebrachten Systemkomponenten, da diese Systemkomponenten an Leitungen angebracht sind, welche wiederum am Behälter befestigt werden. Die Wand des Behälters weist Fenster auf. Diese Fenster dienen als Zugang für die Lichtstrahlen zwischen der ausserhalb des Behälters angeordneten Lichtquelle und dem Reaktorkörper. Der Behälter weist mindestens die gleiche Anzahl an Fenstern auf wie Lichtquellen im System vorgesehen sind. Die Lichtstrahlen werden von der Lichtquelle durch das Fenster in der Wand des Behälters in das Innere des Behälters geführt und treffen darin auf den Reaktorkörper auf. Um ein möglichst verlustfreies Vordringen der Lichtstrahlen im Behälter zu ermöglichen, ist der Behälter evakuiert bzw. ein Vakuumzustand ist im Innern des Behälters realisiert. Die an den unterschiedlichen Punkten des Reaktorkörpers auftreffenden Lichtstrahlen sorgen für die Aufheizung des Reaktorkörpers.

Ausserhalb des Behälters sind Lichtquellen derart angeordnet, dass sie fokussierte Lichtenergie durch die Fenster in der Wand des Behälters auf den Reaktorkörper richten. Nebst den Fenstern in der Wand müssen die fokussierten Lichtstrahlen das Hitzeschild mittels darin vorgesehenen Öffnungen im Hitzeschild passieren. Die Öffnungen im Hitzeschild sind derart bemessen, dass sie gerade den Durchtritt der fokussierten Lichtstrahlen zulassen. Somit wird weiterhin eine maximale Reflexion der Wärmestrahlung durch das Hitzeschild gewährleistet. Die Lichtstrahlen sollen derart fokussiert sein, dass der Brennpunkt der Strahlen möglichst auf der Höhe des Hitzeschildes zu liegen kommt.

Die im Folgenden angeführten vorteilhaften Ausführungsvarianten führen allein oder in Kombination miteinander zu weiteren Verbesserung des Systems.

Vorzugsweise wird die die Solarenergie eines Solarkraftwerks über eine Glasfaserleitung an die Lichtquellen übertragen. Das bedingt, dass mindestens ein Solarkraftwerk im System vorgesehen ist, welches die darin aufgenommene Solarenergie an die Lichtquellen leitet. Das Solarkraftwerk ist vorteilhafterweise ein Lichtkraftwerk, wie es zum Beispiel in WO 03/010470 A1 gezeigt ist. Damit kann die Solarenergie in Form von Strahlenenergie aufgenommen und mit Hilfe von Glasfaserleitungen als Lichtenergie an die Lichtquellen am Behälter weitergeleitet werden.

Der Transport von Lichtenergie erfordert dafür spezifisch vorgesehene Vorrichtungen. Eine geeignete und verlustarme Variante für den Transport von Licht ist die Verwendung von Fasern. In einer weiter bevorzugten Ausführungsform ist die Lichtenergie durch Faserbündel an die Lichtquellen geführt. Eine bestimmte Anzahl an Fasern können in Bündeln zusammengefasst werden.

Eine Lichtquelle ist vorzugsweise mit Lichtenergie von etwa 2 kW opt versorgt. Dies ergibt eine Leistungszufuhr für eine Lichtquelle, mit welchem die Lichtquelle dem Reaktorkörper die Energie zum Erzielen der erforderlichen Temperatur zuführen kann. Zugleich können auch mehrere Lichtquellen am Behälter angeordnet werden, die über das gleiche Solarkraftwerk die Lichtenergie beziehen. Idealerweise weist das fokussierte Licht aus den Lichtquellen Wellenlängen von bis zu etwa 800 nm auf. Dieser Wellenlängenbereich bildet im Wesentlichen den sichtbaren Bereich des Lichts. Ein weiterer Begriff für diese Strahlen ist deren Bezeichnung als kaltes Licht. Die kurzwelligen Strahlen der Solarstrahlen weisen eine höhere Energiedichte auf als die Solarstrahlen mit einer Wellenlänge grösser als 800 nm. Durch die Verwendung der Strahlen mit einer Wellenlänge von bis zu etwa 800 nm wird vom energetisch dichtesten Bereich der Solarstrahlen Gebrauch gemacht.

Das Solarkraftwerk weist vorzugsweise eine optische Leistung von mindestens 400 kWopt auf. Somit kann das Solarkraftwerk in Abhängigkeit der Energiedichte der Glasfaserleitung die Lichtquellen am Behälter mit Solarstrahlen versorgen. Die Leistung von mindestens 400 kWopt wird erforderlich sein, um den Reaktorkörper auf die gewünschte Temperatur aufheizen zu können. Denn eine Leistung von 400 kWopt ermöglicht idealerweise die Versorgung von 200 Lasern/Lichtquellen zu je 2 kWopt. Vorstellbar ist auch, dass mehrere Solarkraftwerke an einem Reaktorkörper angeordnet sind und somit ein Reaktorkörper von mehr als einem Solarkraftwerk versorgt wird.

In einer bevorzugten Ausführungsform umfasst der Reaktorkörper einen Mantelkörper und einen Dissoziationskörper, wobei der Mantelkörper den Dissoziationskörper umschliesst. Der Mantelkörper wird von den Lichtstrahlen direkt aufgeheizt. Da der Dissoziationskörper und der Mantelkörper in direktem Kontakt stehen, wird die vom Mantelkörper aufgenommene Wärme an den Dissoziationskörper weitergeleitet, was schlussendlich zur Aufheizung des Dissoziationskörper führt und darin eine Temperatur von bis zu 2500°C erreicht werden kann. Die Zersetzungsreaktion findet im Dissoziationskörper statt.

Vorteilhafterweise umfasst der Dissoziationskörper Keramik und ist vorzugsweise derart porös, dass er nur für ein Produkt der darin stattfindenden chemischen Reaktion durchlässig ist. Keramik bietet den Vorteil einer hohen Hitzebeständigkeit. Da im Dissoziationskörper Temperaturen von bis 2500°C erreicht werden, ist die Hitzebeständigkeit ein wichtiger Parameter bei der Auswahl des Materials. Zugleich weist Keramik die erforderliche Festigkeit auch bei hohen Temperaturen auf. Der Dissoziationskörper kann aus einem Material mit einer derartigen Porosität bestehen, dass nur eine einzelne Komponente nach der Zersetzung des Gases durch den Dissoziationskörper in dessen Hohlraum diffundieren kann. Bei Verwendung eines solchen keramischen Materials kann im Dissoziationskörper zuerst die thermische Dissoziation stattfinden und anschliessend die dabei zersetzten Komponenten voneinander räumlich getrennt bzw. separiert werden.

Vorzugsweise umfasst der Reaktorkörper Keramik, wobei das Material des Mantelkörpers nicht porös ist. Der Mantelkörper ist als Teil des Reaktorkörpers hohen Temperaturen ausgesetzt. Keramische Materialien bieten den Vorteil, dass sie eine hohe Hitzebeständigkeit aufweisen und der Gegenstand bis zu einer Temperaturen von etwa 2700 °C formstabil bleibt.

Der Mantelkörper weist vorteilhafterweise Vertiefungen an seiner Aussenfläche auf. Die Vertiefungen sind vorzugsweise derart angebracht, dass sie auf einer geraden Linie mit einer Lichtquelle und einer Öffnung im Hitzeschild zu liegen kommen. Die Vertiefungen erzeugen eine grössere Fläche und fangen aufgrund ihrer Form auch die an der Wand der Vertiefung umgelenkten Strahlen auf. Kegelförmige Vertiefungen sind dabei die bevorzugte Ausgestaltungsform.

Die vom Mantelkörper aufgenommene Lichtenergie wird im Mantelkörper in thermische Energie umgewandelt und diese wiederum an den Dissoziationskörper weitergeleitet. Dabei kann der Wärmeverlust bei der Wärmeübertragung minimiert werden, indem der Mantelkörper eng am Dissoziationskörper anliegt und diesen gasdicht umschliesst.

Der Wärmetauscher umfasst vorzugsweise metallisches und/oder keramisches Material und weist Leitungen auf, welche diffusionsdicht gegenüber durchströmenden Gasen sind. Sowohl Metall als auch Keramik ermöglichen eine bei hohen Temperaturen formstabile und chemisch resistente Ausführung des Wärmetauschers. In einer bevorzugten Ausführung umfasst der Wärmetauscher Verbindungsplatten zwischen den Leitungen, welche das zu zersetzende Gas in den Dissoziationskörper führen oder von diesem abführen. Über diese Verbindungsplatten findet ein Wärmetransport statt, so dass die Leitungen, in welchen das Gas vom Reaktorkörper abgeführt wird, ihre Wärme an jene Leitungen abgeben, in welchen das Gas dem Reaktorkörper zugeführt wird.

In einer weiter bevorzugten Ausführungsform bestehen die Hitzeschilde aus einem Metall, umfassen vorzugsweise Bleche, und sind derart vom Reaktorkörper entfernt angebracht, dass sie eine Temperatur von etwa bis zu 1000°C erreichen. Das Material der Hitzeschilde kann als Metall gewählt werden, da Metall formstabil bis zu 1000° C sein kann und eine gute und günstige Verarbeitungsmöglichkeit bietet. Die Hitzeschilde sind vorgesehen, den Reaktorkörper und die Wärmetauscher zu umschliessen, wobei der Abstand dazwischen von der gewünschten Gleichgewichtstemperatur, vorzugsweise 1000° C, bestimmt ist. Die Verwendung von Wolfram oder Tantal bietet aufgrund der hohen Hitzebeständigkeit eine vorteilhafte Ausführung.

In bevorzugter Ausführung weist jede Wand des Behälters mindestens zwei nebeneinander angeordnete Platten auf und der Zwischenraum zwischen den Platten ist entweder evakuiert oder dient zur Durchströmung eines Fluids. Vorstellbar ist auch, dass die Wand mehr als zwei Platten umfasst und die Zwischenräume abwechselnd evakuiert oder von einem Fluid durchströmt sind. Die Ausgestaltung der Zwischenräume ist vom erwünschten Effekt und dem angestrebten Ziel abhängig. Während ein evakuierter Zwischenraum eine ideale Isolation bietet, führt das Durchströmen des Zwischenraums mittels eines Fluids zu einer erzwungenen Konvektion an der Wand und somit zu einem erhöhten Wärmefluss zwischen den Platten der Wand.

Die Fenster in der Wand des Behälters sind vorzugsweise aus Glas oder Quarzglas. Sowohl Glas als auch Quarzglas zeigen eine tiefe Empfindlichkeit gegenüber Temperaturänderungen und besitzen somit ideale Eigenschaften für den Einsatz in einem erfindungsgemässen System. Zugleich schliesst das Glas oder Quarzglas das Fenster in der Wand des Behälters gasdicht ab und sorgt dafür, dass kein Stofftausch über die Fenster stattfinden kann. Quarzglas hat den Vorteil, dass es gut transparent ist für Licht und UV der Sonnenstrahlung.

In einer bevorzugten Ausführung sind die Lichtquellen derart im System angeordnet, dass der aus der Lichtquelle ausgesendete fokussierte Lichtstrahl durch das jeweilige Fenster im Behälter und durch eine zugehörige Öffnung im Hitzeschild direkt auf den Reaktorkörper gerichtet ist. Die Leistung des System zum Erzeugen einer hohen Temperatur steigt mit der Anzahl an Lichtquellen, welche die Energie in Form von Licht zur Verfügung stellen. Beispielsweise können bei einem Solarspiegel von 25 m Radius mindestens 200 Laser/Lichtquellen zu je 2kWopt versorgt werden. Deshalb muss idealerweise das System die gleichzeitige Verwendung von möglichst vielen Lichtquellen zulassen bzw. ermöglichen. Dies wird dadurch erzielt, dass jeder Lichtquelle ein Fenster in der Wand und eine fluchtend dazu angeordnete Öffnung im Hitzeschild zugeordnet sind. Der Brennprunkt der Lichtstrahlen liegt vorzugweise im Bereich der Öffnungen des Hitzeschildes.

Der Behälter weist vorteilhafterweise einen zylinderförmigen Aufbau auf. Damit können die Lichtquellen rotationssymmetrisch am Behälter angebracht werden, so dass für alle Lichtquellen die gleichen Randbedingungen gelten. Ein zylindrischer Behälter weist darüber hinaus eine geeignete Form zur Aufnahme eines Vakuums auf. Die Mantelfläche des Zylinders erzeugt aufgrund ihrer kreisrunden Form keine zusätzlichen Spannungen in der Wand des Behälters.

In einer weiter bevorzugten Ausführungsform durchdringen die Zufuhr- und Abfuhrleitungen die Grund- und Deckelfläche des Behälters und die Leitungen sind derart in einem Kreis angeordnet, dass die Distanz zwischen zwei benachbarten Leitungen für alle Leitungen gleich ist. Das zu zersetzende Gas wird durch Zufuhrleitungen in den Reaktorkörper geführt und von diesem durch Abfuhrleitungen wieder abgeführt. Die Leitungen sind bevorzugt in Richtung der Zylinderachse des Behälters gerichtet und durchdringen somit die Grund- oder Deckelfläche des Behälters. Die Leitungen sind gleichmässig in einem Kreis angeordnet, so dass jede Leitung von den je zwei benachbarten Leitungen den gleichen Abstand hat. Dabei wechseln sich die Zufuhr- und Abfuhrleitungen gegenseitig ab und das Gas in zwei benachbarten Leitungen weist stets entgegengesetzte Strömungsrichtungen auf.

Vorzugsweise ist ein Verteiler zur Aufteilung der Lichtenergie auf die einzelnen Faserbündel vorgesehen. Der Verteiler kann vorgesehen sein, die Lichtenergie derart auf die einzelnen Faserbündel für die Lichtquellen aufzuteilen, dass jedes Faserbündel energetisch möglichst die gleiche Menge an Lichtenergie erhält.

Bevorzugt ist ein Solarkraftwerk, insbesondere eine Kugelspiegelanlage, vorgesehen, welches die aufgenommene Solarstrahlung vorkonzentriert und den Lichtanteil der so konzentrierten Strahlung über eine Glasfaserleitung an den Verteiler weiterleitet. Mit einem Solarkraftwerk kann die erforderliche Lichtenergie mithilfe von Solarstrahlen erzeugt werden. Die Verwendung von Solarstrahlen als Lichtenergie hat den Vorteil, dass die Ökobilanz des ganzen Systems dadurch erhöht wird. Die Kugelspiegelanlage weist eine Spiegelfläche in Prinzip in Form einer Halbkugel auf.

### KURZBESCHREIBUNG DER FIGUREN

Nachfolgend wird die Erfindung unter Bezugnahme auf die Figuren in schematischer Darstellung näher beschrieben. Genannte bevorzugte Merkmale können in beliebiger Kombination verwirklicht werden - soweit sie sich nicht gegenseitig ausschliessen. Es zeigen in nicht massstabsgetreuer, schematischer Darstellung:
- Figur 1:: Ein vertikaler Schnitt durch den Behälter;
- Figur 2:: ein vertikaler Schnitt durch den Reaktorkörper im Behälter;
- Figur 3:: eine Aufsicht und ein Längsschnitt des Dissoziationskörpers;
- Figur 4:: ein vertikaler Schnitt eines Teilbereichs des erfindungsgemässen Systems inklusive der Lichtquelle;
- Figur 5:: ein horizontaler Schnitt durch die Wand des Behälters im Bereich der Beheizungszone;
- Figur 6:: ein vertikaler Schnitt durch die Wand des Behälters im Bereich der Beheizungszone;
- Figur 7:: eine Darstellung des Aufbaus einer 5-wandigen Rohrleitung;
- Figur 8:: eine Aufsicht und ein Längsschnitt der Rohrleitung mit Längsteilung für Kühlmittelvorlauf und -rücklauf mittels einer Trennwand;
- Figur 9:: eine Darstellung des Aufbaus einer 7-wandige Rohrleitung;
- Figur 10:: ein vertikaler Schnitt eines Teilbereichs eines erfindungsgemässen Systems mit der Rohrleitungsverbindung;
- Figur 11:: eine schematische Darstellung einer möglichen Ausführung eines erfindungsmässigen Systems;
- Figur 12:: eine Schnittdarstellung der Wand des Behälters mit einer alternativen Lichtquelle.

### DETAILIERTE BESCHREIBUNG DER FIGUREN

Im Folgenden stehen gleiche Bezugsziffern für gleiche oder funktionsgleiche Elemente (in unterschiedlichen Figuren). Ein zusätzlicher Apostroph kann zur Unterscheidung gleichartiger bzw. funktionsgleicher oder funktionsähnlicher Elemente in einer weiteren Ausführung dienen.

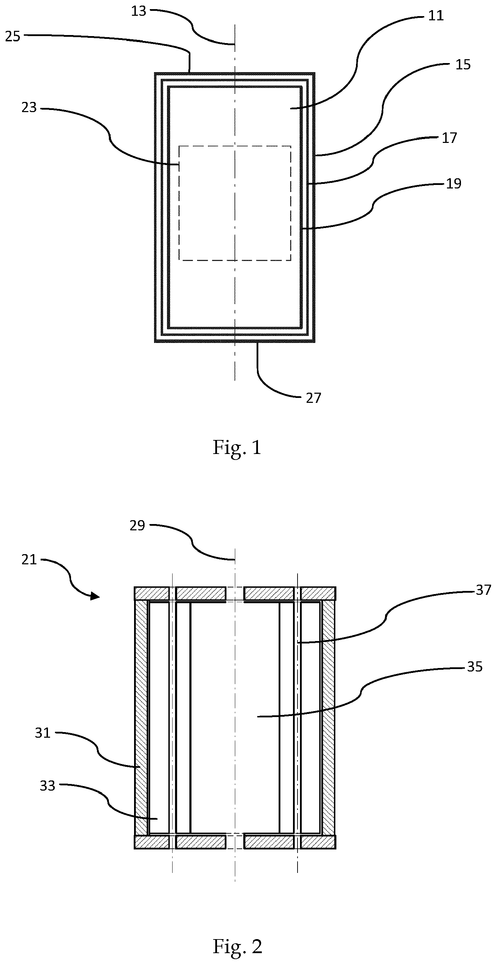

In Figur 1 ist ein Längsschnitt durch einen Behälter 11 gezeigt. Der Behälter 11 weist in der gezeigten Ausführung eine zylindrische Form auf. Die Zylinderachse 13 ist mit einer gestrichelten Linie dargestellt. Die Wand des Behälters umfasst ein 3-wandiges Gefäss aus Edelstahl. Zwischen der äussersten 15 und der mittleren Wand 17 ist eine Wasserkühlung vorgesehen, wogegen der Raum zwischen der mittleren 17 und der innersten Wand 19 evakuiert ist. Der Innenraum des Behälters 11 ist ebenfalls evakuiert, das heisst, dass im Innern des Behälter ein Vakuum herrscht.

Im Innern des Behälters 11 ist ein Reaktorkörper 21 angeordnet, welcher in Figur 1 nicht gezeigt ist. Um diesen Reaktorkörper 21 ist mindestens ein Hitzeschild 23 angeordnet. Das Hitzeschild 23 weist eine im Wesentlichen zylindrische Form auf und umgibt in einem bestimmten Abstand den Reaktorkörper 21 vollständig, so dass das Hitzeschild 23 zwischen dem Reaktorkörper 21 und der Wand des Behälters 11 zu liegen kommt. Eine Aufgabe des Hitzeschildes 23 ist die Reflektion der vom Reaktorkörper 21 abgestrahlten Wärmestrahlung. Das Hitzeschild kann Temperaturen von bis zu 1000°C erreichen. Eine Ausführung des Hitzeschildes mit tiefen Wärmeverlusten kann erzielt werden, wenn zum Beispiel der Radius des Hitzeschildes dreimal so gross ist wie derjenige des Reaktorkörpers.

Das Hitzeschild 23 ist an Rohrleitungen angebracht, welche durch die Deckel- oder Grundfläche 25,27 des Behälters 11 geführt sind. Somit gibt es zwischen dem Behälter 11 und dem Reaktorkörper 21 nur einen Kontakt über die Versorgungszuleitungen des Reaktorkörpers, die also zugleich die mechanischen Halterungen sind.

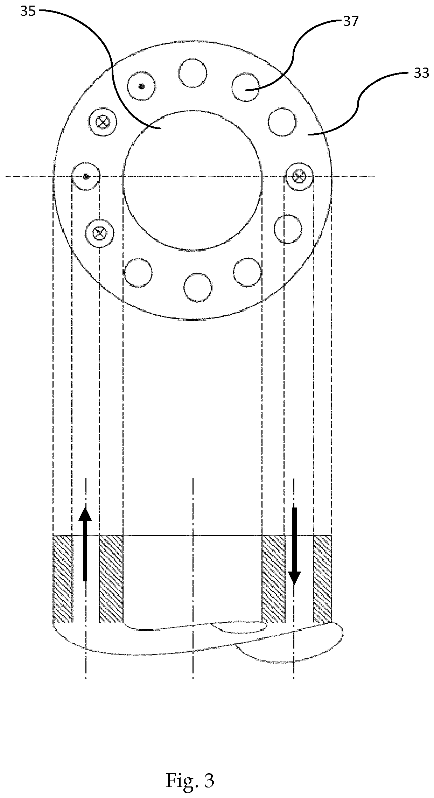

In Figur 2 ist ein Längsschnitt durch den Reaktorkörper 21 gezeigt. Der Reaktorkörper 21 weist einen zylindrischen Aufbau auf. Die gestrichelte Linie in der Mitte des Reaktorkörpers 21 bildet die Zylinderachse 29 des Reaktorkörpers. Der Reaktorkörper 21 umfasst einen Mantelkörper 31 und einen Dissoziationskörper 33. Vorzugsweise sind beide Körper 31,33 aus Keramik hergestellt und weisen deshalb eine hohe Beständigkeit gegenüber hohen Temperaturen auf. Der Mantelkörper 31 weist die Form eines hohlen Zylinders mit zueinander fluchtend angeordneten Aussparungen in der Deckel- und Grundfläche. Der Dissoziationskörper 33 weist einen ringförmigen Aufbau auf, welcher durch eine Durchbohrung 35 in seiner Mitte entlang der Längsachse zustande kommt. Im Dissoziationskörper 33 sind parallel zur mittleren Durchbohrung 35 weitere Durchbohrungen 37 mit einem kleineren Durchmesser vorgesehen, welche in Figur 3 gezeigt sind. Der Dissoziationskörper 33 ist derart im Mantelkörper 31 angeordnet, dass der Mantelkörper 31 den Dissoziationskörper 33 möglichst gasdicht umschliesst und die Aussparungen in der Deckel- und Grundfläche des Mantelkörpers 31 mit den Aussparungen durch den Dissoziationskörper 33 bündig zu liegen kommen. Der Dissoziationskörper 33 dient aufgrund seiner Porosität der räumlichen Trennung von Atomen und Molekülen zwischen den kleineren Durchbohrungen 37 und der mittleren Durchbohrung 35, welche einen Ringinnenraum bildet. Aufgrund seiner Porosität bildet der Dissoziationskörper 33 eine semipermeable Struktur für die Atome oder Moleküle des durch die Durchbohrungen 37 strömenden Fluids. Die Porenweite kann derart gewählt sein, dass ein bestimmtes Atom oder Molekül durch den Dissoziationskörper 33 diffundieren kann.

Figur 3 zeigt eine Aufsicht und einen Längsschnitt des Dissoziationskörpers 33. In dieser Darstellung sind die Durchbohrungen 37 im Dissoziationskörper 33 zu erkennen. Die Durchbohrungen 37 weisen alle den gleichen Abstand zur Zylinderachse des Kernkörpers 29 auf und sind deshalb im ringförmigen Dissoziationskörper 33 rotationssymmetrisch angeordnet. Des Weiteren weisen die Durchbohrungen 37 alle den gleichen Abstand zur jeweiligen benachbarten Durchbohrung 37 auf. Die Durchbohrungen 37 sind für den Transport eines Fluids vorgesehen. Dabei ist die Strömungsrichtung des Fluids in zwei benachbarten Durchbohrungen 37 stets zueinander entgegengerichtet.

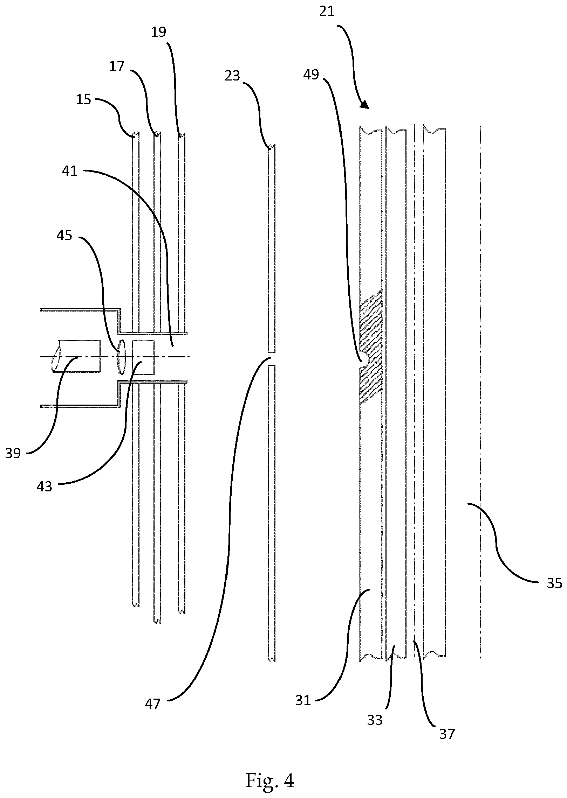

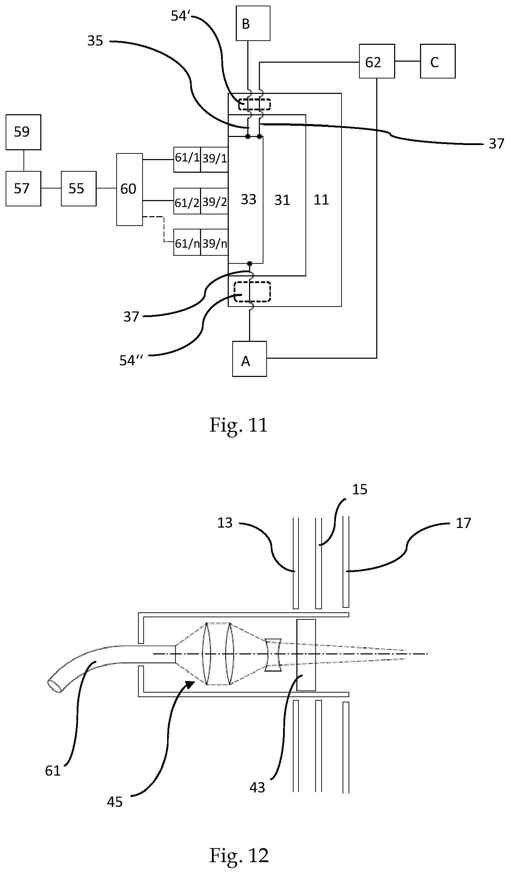

In Figur 4 ist ein Längsschnitt durch einen Bereich des Systems von der Lichtquelle bis zum Dissoziationskörper gezeigt. Der Bereich umfasst die Wand des Behälters 11 bis zur Mittelachse 13 des Behälters. An der Wand des Behälters 11 ist eine Lichtquelle 39 angeordnet. Die Lichtquelle 39 ist derart an einer Aussparung 41 an der Wand des Behälters 11 angeordnet, dass die Lichtquelle 39 ihre Strahlen durch diese Aussparung 41 in das Innere des Behälters 11 emittieren kann. Innerhalb der Aussparung 41 ist ein Glas 43 angeordnet, welches den Innenraum des Behälters zur Lichtquelle 39 hin abschliesst. Das Glas 43 befindet sich auf der Höhe der äusseren 15 und mittleren Wand 17 des Behälters und hat somit eine relativ niedrige Temperatur. Als Lichtquellen sind grundsätzlich alle Systeme geeignet, die einen gerichteten fokussierbaren Lichtstrahl erzeugen, der es gestattet, diesen in der oben beschriebenen Weise in den Reaktor einzuspeisen: Geeignet sind beispielsweise Leuchtdioden oder Diodenlaser, welche elektrisch versorgt werden, mit entsprechenden Linsensystemen. Vorteilhaft sind aber direkt solar versorgte Lichtquellen, zum Beispiel Festkörper-Laser, welcher über die die Glasfaserleitungen aus einem speziellen Solarkraftwerk die solare Lichtenergie auswerten, wie in Figur 4 skizziert. Alternativ kann die Lichtquelle 39 aus einem konventionellen Spiegel-/Linsen-System von Linsen bestehen, in welches das aus dem Glasfaserbündel austretende divergente Licht eingespeist wird und so fokussiert wird. Dies ist in Figur 12 detailliert gezeigt. Der Brennpunkt der Strahlen liegt vorzugsweise auf der Höhe des Hitzeschildes 23. Im Hitzeschild 23 sind Öffnungen 47 zum Durchführen der Strahlen vorgesehen. Der Grund für die Wahl des Brennpunkts der Strahlen auf der Höhe des Hitzeschildes 23 ist, dass dadurch die Dimension der Öffnungen 47 im Hitzeschild 23 so klein wie möglich gewählt werden kann. Dies wiederum führt zum gewünschten Effekt, dass die Rückstrahlung vom Reaktorkörper 21 minimalisiert ist.

Auf der äusseren Oberfläche des Mantelkörpers 31 ist ein etwa kegelförmiges Sackloch 49 vorgesehen. Das Sackloch 49 ist derart angeordnet, dass die Lichtstrahlen in dieses Sackloch 49 gerichtet sind und beim Auftreffen auf die Oberfläche des Mantelkörpers 31 diesen aufheizen.

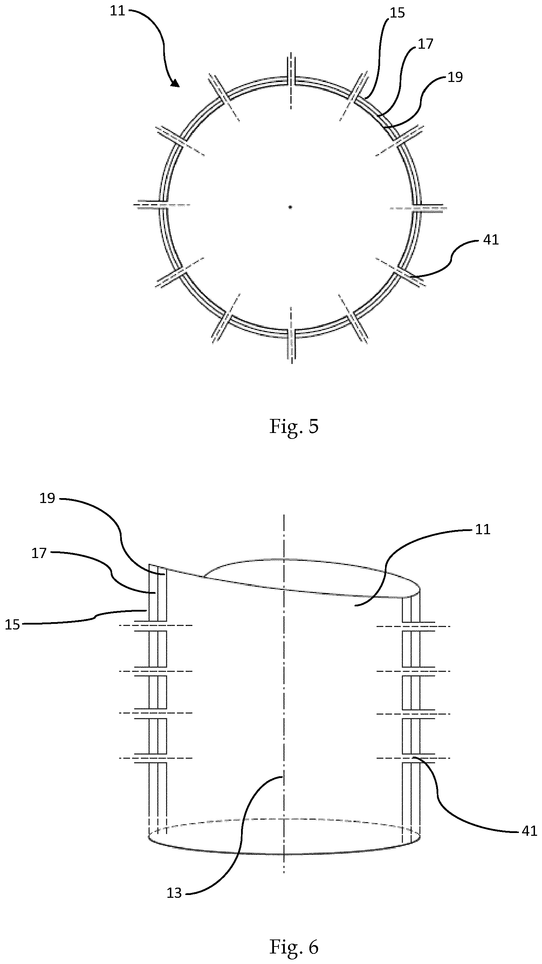

In den Figuren 5 und 6 ist ein Querschnitt bzw. ein Längsschnitt durch den Behälter gezeigt, und zwar im Bereich des Reaktorkörpers. In beiden Figuren sind mehrere gleichmässig angeordnete Aussparungen 41, welche durch alle drei Wände 13, 15, 17 des Behälters durchgehen, zu sehen. Vorzugsweise ist an jedem dieser Aussparungen 41 ausserhalb des Behälters 11 eine Lichtquelle 39 angeordnet, wie in Figur 4 gezeigt. Die Aussparungen 41 bilden somit jene Punkte, durch welche Energie in den Behälter 11 zum Aufheizen des Reaktorkörpers 21 geführt wird. Die Aussparungen 41 sind sowohl in Umfangsrichtung als auch entlang der Höhe des Behälters 11 gleichmässig verteilt, so dass der Abstand zwei benachbarter Aussparungen 41 stets gleich gross ist. In Umfangsrichtung kann die Anzahl der Aussparungen 41 beispielsweise 12 betragen. Die Anzahl der Aussparungen 41 entlang der Höhe ist wiederum von der Höhe des Reaktorkörpers 21 in der Beheizungszone des Behälters 11 abhängig.

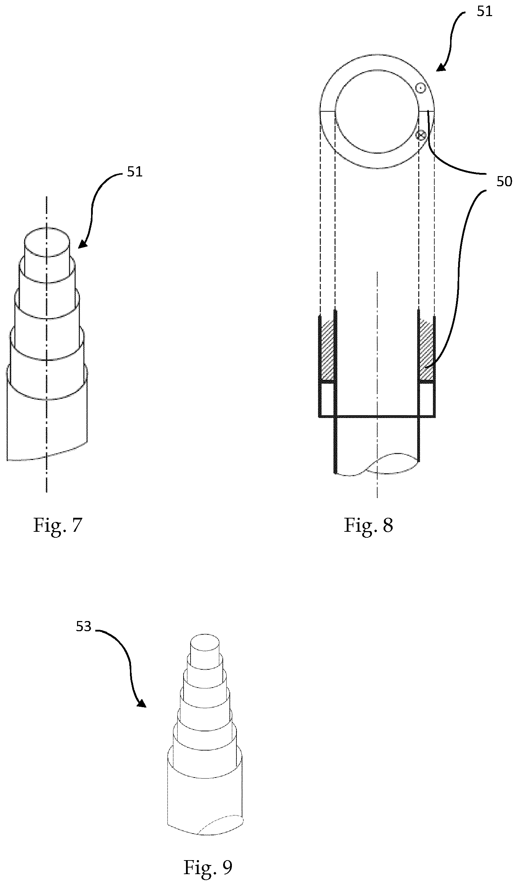

In den Figuren 7 und 8 ist der Aufbau einer Rohrleitung 51 gezeigt, welche sowohl für das Fixieren des Hitzeschildes 23 als auch zur Kühlung desselben innerhalb des Behälters 11 dient. Die Rohrleitung 51 ist durch die Deckel- oder Grundfläche 25, 27 des Behälters bis zum Hitzeschild 23 geführt. Die Rohrleitung weist vorzugsweise einen Aufbau mit fünf ineinander angeordneten Rohre auf. Zwischen den einzelnen Rohren ist eine Isolation durch entweder einem Vakuum oder einer Flüssigkeit als Kühlmittel angeordnet. Lediglich das innerste Rohr der Rohrleitung 51 ist vorgesehen, bis zum Hitzeschild 23 geführt zu sein. Die restlichen Rohre der Rohrleitung 51 ragen nicht in den Innenraum des Behälters 11. Das äussere Rohr der Rohrleitung 51 ist mit der Deckel- oder Grundfläche 25, 27 des Behälters fest verbunden.

Der Reaktorkörper ist ebenfalls mittels Rohrleitungen 53 am Behälter angebracht. Diese Rohrleitungen 53 sind vorgesehen, durch die Deckel- oder Grundfläche 25, 27 des Behälters 11 durchgeführt zu sein. Im Bereich der Durchführung und Fixierung an der Deckel- oder Grundfläche 25, 27 des Behälters ist die Rohrleitung 53 7-wandig, siehe Figur 9. Dabei ist die Größe des Durchmessers der jeweiligen Rohre entsprechend den Erfordernissen des Temperaturgradienten bemessen. Die Temperatur der durchgeleiteten Gase liegt bei ca. 2000 °C, die Temperatur an der Deckel- oder Grundfläche 25, 27 des Behälters hingegen bei ca. 100° C.

Wie bei den Rohrleitungen 51 für das Hitzeschild 23 enden die Kühlmittel-führenden Rohre und die Vakuumzonen der Rohrleitungen 53 nach Durchführung durch die Deckel- oder Grundfläche 25, 27 des Behälters. Das innerste Rohr ist vorgesehen, Temperaturen von bis zu 2000 °C standhalten zu können. In den Zwischenräumen, welche mit einer Flüssigkeit durchströmt werden, ist ein in Längsrichtung laufender Trennwand 50 eingelegt, wie in Figur 8 gezeigt. Die Trennwand 50 zieht sich über die ganze Länge des Rohrs bis auf einen Spalt an jenem Ende des Rohres, mit welchem das Rohr am Behälter angebracht ist. Somit ergeben sich entlang der Trennwand 50 zwei Bereiche, wodurch das Fluid in entgegengesetzte Richtung innerhalb des Rohres fliessen kann. In einem ersten Bereich strömt das Fluid in das Rohr ein, wird am unteren Ende umgelenkt und strömt im zweiten Bereich wieder aus dem Rohr aus.

Vor Durchtritt der Rohrleitung 53 durch das Hitzeschild 23 endet der Metallteil der Rohrleitungen 53 und wird durch eine Keramikröhre fortgesetzt, welche dann, nach Durchführung durch Deckel-bzw. Bodenplatte des Mantelkörpers 31, in die entsprechende kleinere Durchbohrung 37 des Dissoziationskörpers 33 eingreift. Das Material des Keramikteils der Rohrleitungen 53 sollte nicht porös sein und kann mindestens 2500 °C standhalten.

Diese Verbindungen erhöhen auch die mechanische Stabilität des Systems, da auf diese Weise die Gesamtheit der Rohrleitungen 53 eine Art zylindrische Gitterstruktur bildet.

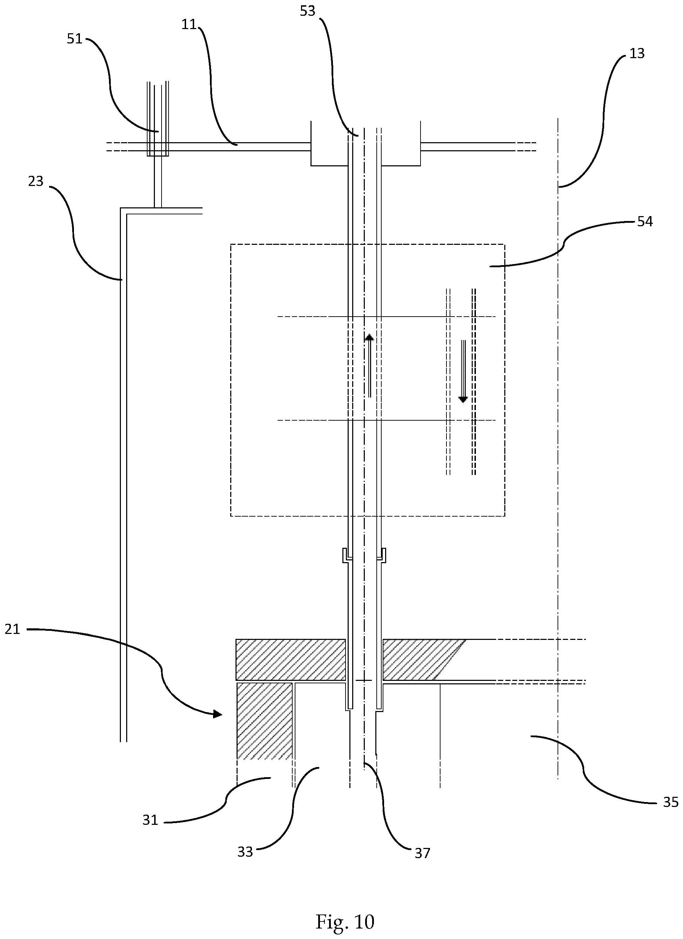

In Figur 10 ist ein Ausschnitt der Verbindung zwischen dem Reaktorkörper 21 und dem Behälter 11 des erfindungsgemässen Systems gezeigt. Der Reaktorkörper 21 ist über die Rohrleitungen 53 mit dem Behälter 11 entweder über dessen Deckelfläche 25 oder über dessen Grundfläche 27 verbunden. Die Rohrleitungen 53 sind in die Durchführungen 37 im Dissoziationskörper 33 geführt, so dass ein Fluid durch die Rohrleitung 53 ungehindert in den Dissoziationskörper 33 einströmen und durch diesen ohne erheblichen Widerstand weiter strömen kann. Wie bereits erwähnt, sind mehrere Rohrleitungen 53 vorgesehen, welche das Fluid zum Reaktorkörper 21 zu oder von diesem das Fluid abführen. Dabei hat das Fluid in zwei benachbarten Rohrleitungen 53 jeweils entgegengesetzte Strömungsrichtungen. Zwischen den Rohrleitungen sind sogenannte Verbindungsklammern 52 angebracht, welche durch eine oder mehrere zu den Rohrleitungen 53 senkrechten Platten gebildet sind. Über diese findet ein Wärmetausch zwischen den Rohrleitungen 53 statt. Es können mehrere Platten parallel übereinander angebracht sein, womit der Wärmetausch erhöht wird. Die das Fluid abführende Rohrleitung wird durch die hohen Temperaturen des abzuführenden Gases erwärmt und leitet diese Wärme über die Verbindungsklammern 52 an die benachbarten Rohrleitungen weiter. Die benachbarten Rohrleitungen werden dadurch aufgewärmt, was wiederum auch zur Erwärmung des darin in den Reaktorkörper einströmenden Fluids führt. Somit wird die Wärme des ausströmenden Fluids zur Aufheizung des einströmenden Fluids verwendet und mit Hilfe der Verbindungsklammern 52 bildet sich ein interner Wärmetauscher 54. Ein Wärmetauscher 54 ist zwischen dem Reaktorkörper 21 und der Deckelfläche 25 des Behälters als auch zwischen dem Reaktorkörper 21 und der Grundfläche 27 des Behälters vorgesehen. Die senkrecht zu den Rohrleitungen angeordneten Platten bilden zusammen eine Art Gitterstruktur, wodurch die mechanische Stabilität des Systems erhöht wird. Dieser Aspekt kommt stärker zum Tragen, wenn es sich dabei um Metallplatten handelt.

Den Reaktorkörper 21 mit den ober- und unterhalb angeordneten Wärmetauschern 54 umgibt ein Hitzeschild 23. Dieses weist vorzugweise die gleiche geometrische Form auf wie der Reaktorkörper 21. Ist der Reaktorkörper 21 zum Beispiel zylinderförmig so ist das Hitzeschild 23 vorzugsweise zylinderförmig. Ist der Reaktorkörper 21 dagegen kugelförmig ist das Hitzeschild 23 bevorzugt ebenfalls kugelförmig. Das Hitzeschild 23 ist über weitere Rohrleitungen 51 mit dem Behälter 11 verbunden. Diese Rohrleitungen 51 bilden die einzige Verbindung zwischen dem Hitzeschild 23 und der Deckel- 25 oder Grundfläche 27 des Behälters und sorgen somit für den Halt des Hitzeschildes 23 innerhalb des Behälters 11.

In Figur 11 ist eine schematische Abbildung einer Ausführung des erfindungsmässigen Systems gezeigt. Im gezeigten System wird die Energie zur Erhitzung des Reaktorkörpers 21 mit dem darin enthaltenen Dissoziationskörper 33 durch Solarenergie aus mehreren Lichtquellen 39 erzielt. An jeder Lichtquelle 39 ist je ein Faserbündel 61 angebracht, welche wiederum an einem Verteiler angeordnet sind. Der Verteiler 60 teilt die von einem Solarkraftwerk 57 austretende und in einer Glasfaserleitung 55 geführte Solarenergie auf die einzelnen Lichtquellen 39 auf. Das Solarkraftwerk 57 ist vorgesehen, um die gesamte direkte Solarstrahlung 59 zu konzentrieren und den kurzwelligen Anteil der Strahlung in die Faser der Glasfaserleitung 55 einzuspeisen. Der kurzwellige Anteil der Solarstrahlung wird durch Strahlen mit einer kleineren Wellenlänge als 800 nm gebildet. Vorzugsweise wird der sichtbare Bereich der Solarstrahlen, welche Wellenlängen von bis zu 800 nm aufweisen, vom Solarkraftwerk 57 zur Lichtquelle 39 geführt. Die Solarstrahlen sind vorgesehen, in Glasfaserleitungen 55 als Licht an die jeweiligen Lichtquellen 39 übertragen zu werden. Die Glasfaserleitung 55 kann eine Energiedichte von 2000 kW/m² erreichen. Das heisst, dass die erbrachte Leistung eines Solarkraftwerks 57 von 500 kW durch eine Glasfaserleitung 55 mit einer Querschnittsfläche von 0.25 m² gefördert werden kann. Die Verwendung von Glasfaserleitung 55 zur Übertragung der Energie als Licht ermöglicht das Erreichen solch grosser Energiedichten. Die Energie des Solarkraftwerks 57 gelangt über die Glasfaserleitung 55 zum Verteiler 60. Der Verteiler 60 teilt die gesamte Energiemenge aus der Glasfaserleitung 55 durch die Anzahl mit dem Verteiler 60 verbundenen Lichtquellen 39. Zum Beispiel erhält bei einer Anzahl von 200 Lichtquellen 39 und einer Energiemenge von 400 kW in der Glasfaserleitung 55 jede Lichtquelle 39 eine Leistungszufuhr von 2 kW.

Der Dissoziationskörper 33 ist vom Mantelkörper 31 umgeben und bildet mit diesem den Reaktorkörper 21. Der Reaktorkörper 21 ist innerhalb des Behälter 11 angeordnet. Schematisch ist das in den Behälter 11 und Reaktorkörper 21 eingeströmte Fluid als «A» gekennzeichnet. Jener Teil des Fluids, der in den Ringinnenraum des Dissoziationskörpers diffundiert, ist als «B» gekennzeichnet. Der nach der Zersetzung übrig gebliebene Teil des Fluids ist als «C» gekennzeichnet. In der Darstellung wird das Fluid A von einer Seite des Dissoziationskörper eingeführt und von der gegenüberliegenden Seite wird das Fluid B abgeführt. Vorzugsweise wird Fluid A von beiden gegenüberliegenden Seiten in den Dissoziationskörper 33 eingeführt. Damit kommen auch die auf beiden Seiten des Dissoziationskörpers 33 angeordneten Wärmetauscher 54 zum Einsatz.

Die Verteilung der Fasern auf die Bündel 61 erfolgt so, dass eine möglichst gleichmäßige Versorgung der Laser/Lichtquelle mit Lichtenergie im Verlaufe eines Tages gegeben ist. Beispielsweise können zu einer Pilotanlage des Solarkraftwerks 57 bei einem Solarspiegel von 25 m Radius mindestens 200 Laser/Lichtquelle zu je 2 kWopt versorgt werden.

In Figur 12 ist eine Lichtquelle 39 gezeigt, bei welcher das Licht aus einem Faserbündel 61 auf Linsen 45 trifft. Die Linsen 45 sind in einem kleinem Abstand nacheinander angeordnet. Die gestrichelte Linie in der Abbildung zeigt den weitesten Winkel der Lichtstrahlen. Nach dem Faserbündel treten die Lichtstrahlen aus, so dass diese zum Beispiel mit Hilfe von zwei Sammellinsen fokussiert und anschliessend mit einer Streulinse auf den gewünschten Brennpunkt konzentriert werden.

Während die Erfindung vorstehend unter Bezugnahme auf spezifische Ausführungsformen beschrieben wurde, ist es offensichtlich, dass Änderungen, Modifikationen, Variationen und Kombinationen ohne vom Erfindungsgedanken abzuweichen gemacht werden können.

### BEZUGSZEICHENLISTE:

- 11: Behälter
- 13: Zylinderachse des Behälters
- 15: Äussere Wand des Behälters
- 17: Mittlere Wand des Behälters
- 19: Innere Wand des Behälters
- 21: Reaktorkörper
- 23: Hitzeschild
- 25: Deckelfläche des Behälters
- 27: Grundfläche des Behälters
- 29: Zylinderachse des Reaktorkörpers
- 31: Mantelkörper
- 33: Dissoziationskörper
- 35: Durchbohrung oder Ringinnenraum im Kernkörper
- 37: Kleinere Durchbohrung
- 39: Lichtquelle
- 41: Aussparung in der Wand des Behälters
- 43: Glasfenster
- 45: Linse
- 47: Öffnung im Hitzeschild
- 49: Sackloch
- 50: Trennwand im Rohr
- 51: Rohrleitungen bis zum Hitzeschild
- 53: Rohrleitungen bis zum Reaktorkörper
- 54: Wärmetauscher
- 55: Lichtleiter
- 57: Solarkraftwerk
- 59: Solarstrahlen
- 60: Verteiler auf die Lichtquellen
- 61: Faserbündel speziell den Lichtquellen zugeordnet
- 62: Abscheider (Trennsystem)

## Patentansprüche

1. System zur Erzeugung von Temperaturen von 2000°C bis zu 2500 °C zum Bewirken von Zersetzungsreaktionen von Gasen, wie beispielsweise die Zerlegung von Wasser in Wasserstoff und Sauerstoff, in einem chemischen Reaktorkörper energetisch versorgt durch Verwendung von verdichtetem Sonnenlicht,
- wobei der Reaktorkörper vorgesehen ist, Lichtenergie durch seine äussere Oberfläche aufzunehmen und ein poröses Material umfasst und im Reaktorkörper ein ausgewähltes Gas in mindestens zwei Komponenten zerlegt wird, wovon die eine, z.B. Wasserstoff, durch Diffusion in einen Hohlraum gelangt, von dem aus sie abgepumpt werden kann,
das System umfassend
- Zufuhrleitung und Abfuhrleitung zum Zuführen bzw. Abführen des Gases in den oder aus dem Reaktorkörper,
- Wärmetauscher, welche im Temperaturbereich oberhalb von 1000 °C eine Wärmeübertragung von ein- und ausströmenden Gasen möglichst verlustfrei ermöglichen,
- Hitzeschilde, die den Reaktorkörper und die Wärmetauscher in geeignetem Abstand umschliessen und die von diesen abgegebene Wärmestrahlung weitestgehend reflektieren,
- Kühlsysteme für die Hitzeschilde mit mehreren ineinander liegenden Rohrsystemen, die abwechselnd evakuiert sind, bzw. von verschiedenen Kühlmitteln durchströmt werden,
- einen Behälter, der den Reaktorkörper, die Wärmetauscher und die Hitzeschilde umschliesst und evakuiert ist, mit dem Ziel, die Energieverluste des Systems auf möglichst gering zu haltende Strahlungsverluste zu beschränken, sowie
- eine grosse Anzahl von Lichtquellen, welche fokussierte Lichtenergie durch Fenster in der Wand des Behälters und Öffnungen in den Hitzeschilden auf den Reaktorkörper richten, so dass der Reaktorkörper möglichst gleichmässig erwärmt ist,
**dadurch gekennzeichnet, dass** Glasfaserleitungen vorgesehen sind, welche die Lichtenergie zu den Lichtquellen führen.

2. System nach Anspruch 1, **dadurch gekennzeichnet, dass** ein Solarkraftwerk die Solarenergie über die Glasfaserleitung, insbesondere durch Faserbündel, an die Lichtquellen überträgt.

3. System nach Anspruch 1 oder 2, **dadurch gekennzeichnet, dass** eine Lichtquelle mit Lichtenergie von etwa 2 kW opt versorgt ist.

4. System nach einem der Ansprüche 1 bis 3, **dadurch gekennzeichnet, dass** das fokussierte Licht aus den Lichtquellen eine Wellenlänge bis zu etwa 800 nm aufweist.

5. System nach einem der Ansprüche 2 bis 4, **dadurch gekennzeichnet, dass** das Solarkraftwerk eine Leistung von mindestens 400 kW aufweist.

6. System nach einem der Ansprüche 1 bis 5, **dadurch gekennzeichnet, dass** der Reaktorkörper einen Mantelkörper und einen Dissoziationskörper umfasst, wobei der Mantelkörper den Dissoziationskörper umschliesst.

7. System nach Anspruch 6, **dadurch gekennzeichnet, dass** der Dissoziationskörper Keramik umfasst und vorzugsweise derart porös ist, dass er nur für ein Produkt der darin stattfindenden chemischen Reaktion durchlässig ist, wobei das Material des Mantelkörpers nicht porös ist.

8. System nach einem der Ansprüche 6 bis 7, **dadurch gekennzeichnet, dass** die Vertiefungen an der Aussenfläche des Mantelkörpers derart angebracht sind, dass sie auf einer geraden Linie mit einer Lichtquelle und einer Öffnung im Hitzeschild zu liegen kommen.

9. System nach einem der Ansprüche 1 bis 8, **dadurch gekennzeichnet, dass** jede Wand des Behälters mindestens zwei nebeneinander angeordnete Platten aufweist und der Zwischenraum zwischen den Platten entweder evakuiert ist oder zur Durchströmung eines Fluids dient.

10. System nach einem der Ansprüche 1 bis 9, **dadurch gekennzeichnet, dass** die Fenster in der Wand des Behälters aus Quarzglas oder Glas sind.

11. System nach einem der Ansprüche 1 bis 10, **dadurch gekennzeichnet, dass** die Lichtquellen derart im System angeordnet sind, dass der aus der Lichtquelle ausgesendete fokussierte Lichtstrahl durch das jeweilige Fenster im Behälter und durch eine zugehörige Öffnung im Hitzeschild direkt auf den Reaktorkörper gerichtet ist.

12. System nach einem der Ansprüche 1 bis 11, **dadurch gekennzeichnet, dass** der Behälter einen zylinderförmigen Aufbau aufweist.

13. System nach einem der Ansprüche 1 bis 12, **dadurch gekennzeichnet, dass** die Zufuhr- und Abfuhrleitungen die Grund- und Deckelfläche des Behälters durchdringen und die Leitungen derart in einem Kreis angeordnet sind, dass die Distanz zwischen zwei benachbarten Leitungen für alle Leitungen gleich ist.

14. System nach einem der Ansprüche 1 bis 13, **dadurch gekennzeichnet, dass** ein Verteiler zur Aufteilung der Lichtenergie auf die einzelnen Faserbündel vorgesehen ist.

15. System nach einem der Ansprüche 1 bis 14, **dadurch gekennzeichnet, dass** eine Kugelspiegelanlage, insbesondere ein Solarkraftwerk, vorgesehen ist, welche die aufgenommene Solarstrahlung vorkonzentriert und den Lichtanteil der so konzentrierten Strahlung über eine Glasfaserleitung an den Verteiler weiterleitet.

## Claims

1. System for generating temperatures of 2000 °C to 2500 °C to cause decomposition reactions of gas, such as for example the decomposition of water into hydrogen and oxygen, in a chemical reaction body that is supplied with energy by using densified sunlight,
- wherein the reaction body is provided to absorb light energy through its outer surface and comprises a porous material and a selected gas is decomposed in the reaction body into at least two components, one of them, for example hydrogen, passes by diffusion into a hollow space from which it can be pumped out,
the system comprising:
- supply pipe and discharge pipe for suppling or discharging gas into or out from the reaction body,
- heat exchangers that make possible a heat transfer of inflowing and outflowing gas with as little loss as possible in the temperature range above 1000°C,
- heat shields that enclose the reaction body and the heat exchangers at a suitable distance and that reflect as much as possible the heat radiation emitted by them,
- cooling systems for the heat shields with several interlocking pipe systems that are alternately evacuated or flowed through by different cooling agents,
- a container that surrounds the reactor body, the heat exchangers and the heat shields and is evacuated with the aim to limit the energy losses of the system to minimized radiation losses as well as
- a great number of light sources that direct focused light energy through windows in the wall of the container and through openings in the heat shields to the reactor body so that the reaction body is heated up as uniformly as possible,
**characterized in that** glass fiber cables that guide the light energy to the light sources are provided.

2. System according to claim 1, **characterized in that** a solar power plant transfers the solar energy to the light sources by the glass fiber cable, in particular by fiber bundles.

3. System according to claim 1 or 2, **characterized in that** a light source is optically powered with light energy of approximately 2 kW.

4. System according to one of the claims 1 to 3, **characterized in that** the focused light from the light sources has a wave length up to approximately 800 nm.

5. System according to one of the claims 2 to 4, **characterized in that** the solar power plant has a power of at least 400 kW.

6. System according to one of the claims 1 to 5, **characterized in that** the reactor body comprises a casing body and a dissociation body, wherein the casing body encloses the dissociation body.

7. System according to claim 6, **characterized in that** the dissociation body comprises ceramics and is preferably porous so that it is permeable only for a product of the chemical reaction taking place within.

8. System according to one of the claims 6 to 7, **characterized in that** the recesses on the outer surface of the casing body are provided in such a manner that they come to rest on a straight line with a light source and an opening in the heat shield.

9. System according to one of the claims 1 to 8, **characterized in that** each wall of the container comprises at least two plates arranged side by side and the intermediate space between the plates is either evacuated, or serves for the flowing through of a fluid.

10. System according to one of the claims 1 to 9, **characterized in that** the windows in the wall of the container are made of quartz glass or glass.

11. System according to one of the claims 1 to 10, **characterized in that** the light sources are arranged in the system in such a manner that the focused light beam emitted by the light source is guided through the respective window in the container and through a corresponding opening in the heat shield directly to the reaction body.

12. System according to one of the claims 1 to 11, **characterized in that** the container has a cylindrical structure.

13. System according to one of the claims 1 to 12, **characterized in that** the supply and discharge pipes penetrate through the bottom and cover surface of the container and the pipes are arranged in a circle in such a manner that the distance between two adjacent pipes is the same for all the pipes.

14. System according to one of the claims 1 to 13, **characterized in that** a manifold is provided for distributing the light energy onto the single fiber bundles.

15. System according to one of the claims 1 to 14, **characterized in that** a spheric mirror installation, in particular a solar power plant, is provided that preconcentrates the absorbed solar radiation and transmits the light component of the so concentrated radiation to the manifold over a glass fiber cable.

## Revendications

1. Système pour produire des températures de 2000 °C à 2500 °C pour provoquer des réactions de décomposition de gaz, comme par exemple la décomposition d'eau en hydrogène et en oxygène, dans un corps de réacteur chimique alimenté en énergie par l'utilisation de lumière du soleil densifiée,
- cependant que le corps de réacteur est prévu pour absorber de l'énergie lumineuse à travers sa surface extérieure et comprend un matériau poreux et un gaz sélectionné est décomposé dans le corps de réacteur en au moins deux composants, dont l'un, par exemple l'hydrogène, pénètre par diffusion dans un espace creux à partir duquel il peut être pompé,
le système comprenant :
- une conduite d'amenée et une conduite d'évacuation pour amener ou évacuer le gaz dans ou hors du corps de réacteur,
- des échangeurs thermiques qui permettent un transfert de chaleur entrants et sortants autant que possible sans perte de gaz dans la plage de température supérieure à 1000 °C,
- des boucliers thermiques qui entourent le corps de réacteur et les échangeurs thermiques à une distance appropriée et qui réfléchissent le plus possible le rayonnement thermique qu'ils émettent,
- des systèmes de refroidissement pour les boucliers thermiques avec plusieurs systèmes de tuyaux situés les uns dans les autres qui sont évacués en alternance, ou qui sont traversés par différents agents de refroidissement,
- un conteneur qui entoure le corps de réacteur, les échangeurs thermiques et les boucliers thermiques et est évacué en vue de limiter les pertes d'énergie du système à des pertes de rayonnement minimisées ainsi
- qu'un grand nombre de sources lumineuses qui dirigent de l'énergie lumineuse focalisée à travers des fenêtres dans la paroi du conteneur et à travers des ouvertures dans les boucliers thermiques sur le corps de réacteur si bien que le corps de réacteur est réchauffé le plus uniformément possible,
**caractérisé en ce que** des câbles à fibres optiques qui guident l'énergie lumineuse vers les sources de lumière sont prévus.

2. Système selon la revendication 1, **caractérisé en ce qu'**une centrale solaire transmet l'énergie solaire aux sources lumineuses par le câble à fibre optique, en particulier par des faisceaux de fibres.

3. Système selon la revendication 1 ou 2, **caractérisé en ce qu'**une source lumineuse est alimentée optiquement avec de l'énergie lumineuse d'environ 2 kW.

4. Système selon l'une des revendications 1 à 3, **caractérisé en ce que** la lumière focalisée provenant des sources lumineuses présente une longueur d'onde allant jusqu'à environ 800 nm.

5. Système selon l'une des revendications 2 à 4, **caractérisé en ce que** la centrale solaire présente une puissance d'au moins 400 kW.

6. Système selon l'une des revendications 1 à 5, **caractérisé en ce que** le corps de réacteur comprend un corps d'enveloppe et un corps de dissociation, le corps d'enveloppe entourant le corps de dissociation.

7. Système selon la revendication 6, **caractérisé en ce que** le corps de dissociation comprend de la céramique et est de préférence poreux si bien qu'il n'est perméable que pour un produit de la réaction chimique qui s'y produit, le matériau du corps d'enveloppe n'étant pas poreux.

8. Système selon l'une des revendications 6 à 7, **caractérisé en ce que** les renfoncements sont arrangés sur la surface extérieure du corps d'enveloppe de telle manière qu'ils viennent reposer sur une ligne droite avec une source lumineuse et une ouverture dans le bouclier thermique.

9. Système selon l'une des revendications 1 à 8, **caractérisé en ce que** chaque paroi du conteneur présente au moins deux plaques juxtaposées et l'espace intermédiaire entre les plaques est soit évacué, soit sert au passage d'un fluide.

10. Système selon l'une des revendications 1 à 9, **caractérisé en ce que** les fenêtres dans la paroi du conteneur sont en verre de quartz ou en verre.

11. Système selon l'une des revendications 1 à 10, **caractérisé en ce que** les sources lumineuses sont placées dans le système de telle manière que le faisceau lumineux focalisé émis est dirigé directement sur le corps de réacteur à travers la fenêtre respective dans le conteneur et à travers une ouverture correspondante dans le bouclier thermique.

12. Système selon l'une des revendications 1 à 11, **caractérisé en ce que** le conteneur présente une structure cylindrique.

13. Système selon l'une des revendications 1 à 12, **caractérisé en ce que** les conduites d'amenée et d'évacuation traversent la surface du fond et du couvercle du conteneur et les conduites sont placées dans un cercle de telle manière que la distance entre deux conduites voisines est la même pour toutes les conduites.

14. Système selon l'une des revendications 1 à 13, **caractérisé en ce qu'**un répartiteur est prévu pour la répartition de l'énergie lumineuse sur les faisceaux de fibres individuels.

15. Système selon l'une des revendications 1 à 14, **caractérisé en ce qu'**une installation de miroir sphérique, en particulier une centrale solaire, est prévue qui préconcentre le rayonnement solaire absorbé et transmet la lumière du rayonnement ainsi concentré au répartiteur par un câble à fibres optiques.
